# EUROPEAN PATENT APPLICATION

(11) **EP 2 492 724 A1**
(43) Date of publication of application: **29.08.2012**
(21) Application number: 11155837.5
(22) Date of filing: 24.02.2011
(51) Int. Cl.: G02B 6/00, G02F 1/13357

(54) **Integrated backlight module with good heat equalization and heat dissipation performance**

(71) Applicant: Kocam International Co.Ltd., Kung Fu Road San Chung City, Taipei Hseng (CN)
(72) Inventor: Chen, Tsan-Jung, San Chung City (TW)
(74) Representative: Kurig, Thomas

(57) **Abstract**

The present invention relates to an integrated backlight module with good heat equalization and heat dissipation performance, comprising: a main frame, a welded material, a thermal conductive medium, and at least one light source module, wherein the main frame has at least one edge for disposing the light source module and has good heat dissipation property. The light source module comprises: a reflective member, a copper circuit layer and a plurality of LED chips, wherein the light source module attached with a thermal conductive adhesion is attached to the edge of the main frame via the thermal conductive medium; besides, the welded material is used for steadily combining the thermal conductive medium with the edge. Thus, when the plurality of LED chips emit, the heat produced by the LED chips is transferred to the thermal conductive medium through the copper circuit layer and the thermal conductive adhesion, and the thermal conductive medium conducts the heat to the edge of the main frame through a high efficiency thermal conducting way, so that the heat is dissipated via the main frame.

## Description

### BACKGROUND OF THE INVENTION

### 1. Technical Field

The present invention relates to a backlight module, and more particularly, to an integrated backlight module with good heat equalization and heat dissipation performance, in which, at least one light source module, a thermal conductive medium and a plurality of thermal conductive belts are integrated in a main frame.

### 2. Description of Related Art

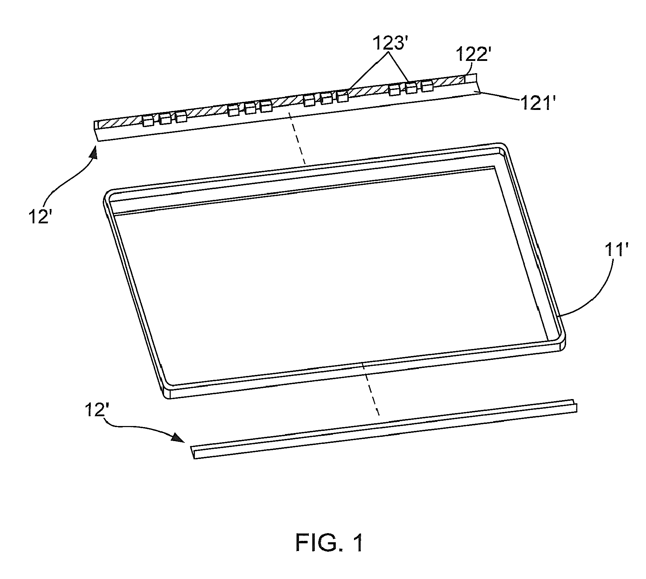

LCD display is the most widely used display product, which is able to exactly show images by way of using a liquid crystal layer of a liquid crystal panel to control the light transmittance of the location of each pixel. Currently, the LCD displays are massively applied in TV, mobile phone, smart phone, notebook, and personal digital assistant (PDA). However, since the liquid crystal panel is a non-self-luminous material, the LCD display must to be included a backlight module for providing the liquid crystal panel with a light source. Please refer to FIG. 1, which illustrates an assembled schematic diagram of a conventional LED backlight module and a main frame of an LCD display. As shown in FIG. 1, generally, the LCD display includes two backlight modules 12' oppositely disposed on upper/lower edge or left/right edge of a main frame 11' (in FIG. 1, the two backlight modules 12' are oppositely disposed on upper edge and lower edge of the main frame 11'). In which, each backlight module 12' at least includes: a housing 121', a print circuit board 122' and a plurality of LED chips 123'.

It is well known that, when the plurality of LED chips 123' emit, a heat accumulation is produced in the backlight module 12', and the heat accumulation distorts the light guiding plate or optical films installed in the main frame 11'; and more seriously, the heat accumulation breaks the light guiding plate or optical films, such that the LCD display can not show the images normally.

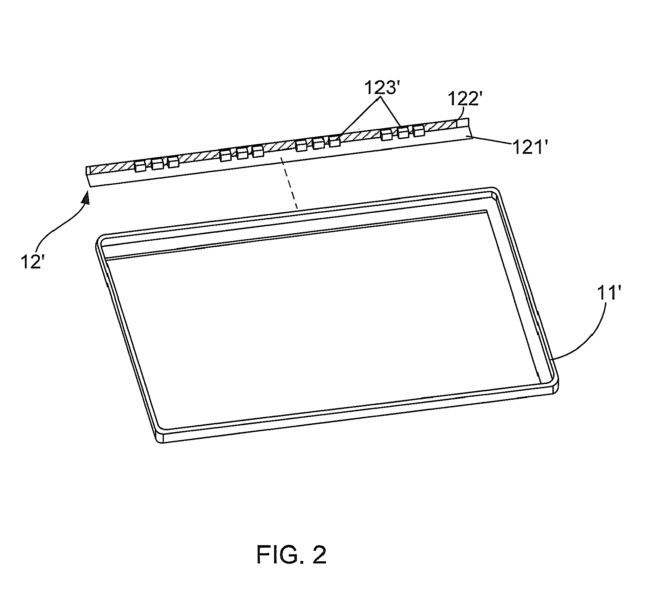

Continuously referring to FIG. 2, which illustrates a second assembled schematic diagram of the conventional LED backlight module and the main frame of the LCD display. As shown in FIG. 2, according to that the heat accumulation result in the damage of the light guiding plate and the optical films, some LCD display manufacturers merely dispose one backlight module 12' on one edge of the main frame 11', therefore, when the LED chips 123' emit, the heat accumulation produced in the backlight module 12' can be reduced. However, on the contrary, this way causes an extremely temperature difference between two sides of the light guiding plate or the optical films; Furthermore, the temperature difference causes two distinct distortions in the two sides of the light guiding plate or the optical films, respectively, so as to affect the balance and aesthetic of the appearance of the LCD display.

Since the heat accumulation occurring in the LCD display can not be effectively solved, some researches and patent specifications propose and introduce means for improving the heat accumulation; wherein the means proposed by those researches and patent specifications are to change the shape or material of the housing 121' or the print circuit board 122' in order to achieve the effect of heat dissipation. However, the means for improving heat accumulation are effective merely when the backlight module 12' is singly used; therefore, once the backlight module 12' is installed in the main frame 11' of the LCD display, the heat produced by the LED chips 123' would be ruled out of the backlight module 12' and accumulates between the backlight module 12' and the main frame 11', and then a second level heat accumulation occurs. For the housing 121' is not completely attached to the bottom surface of the main frame 11', it is easily to know that a gap is formed between the housing 121' and the main frame 11', and the air in the gap becomes a thermal resistance when a thermal conduction acts between the housing 121' and the main frame 11'; For this reason, the second level heat accumulation exists between the main frame 11' and the backlight module 12' can not be effectively dissipated through the main frame 11'.

Thus, according to the above descriptions of the assembly of the conventional LED backlight module and the main frame in the LCD display, it is easily to know that the assembly of the conventional LED backlight module and the main frame in the LCD display still includes shortcomings and drawbacks; Accordingly, in order to solve the heat accumulation produced between the LED module and the main frame in the LCD display and the problem that the temperature can not be evenly spread over the bottom surface of the main frame, the inventor of the present application has made great efforts to make inventive research thereon and eventually provided an integrated backlight module with good heat equalization and heat dissipation performance.

### BRIEF SUMMARY OF THE INVENTION

The first objective of the present invention is to provide an integrated backlight module with good heat equalization and heat dissipation performance, in which, a thermal conductive medium and at least one light source module are integrated in a main frame, therefore, through the thermal conductive medium, the heat produced by the light source module can be conducted to the main frame, and the heat can be further dissipated via the main frame by way of thermal convection, such that a high efficient heat dissipation performance is carried out.

Accordingly, to achieve the first objective of the present invention, the inventor proposes an integrated backlight module with good heat equalization and heat dissipation performance, comprising:
a main frame, having at least one edge and good heat dissipation property;
a welded material, welded to the edge;
a thermal conductive medium, attached to the welded material by a second surface thereof; and
at least one light source module, attached to a first surface of the thermal conductive medium via a thermal conductive adhesion, and used for providing a backlight source to a light guiding plate in the main frame, the light source module comprises: a reflective member, formed as a housing, and the housing has a plurality of holes disposed in a housing bottom thereof; a copper circuit layer, attached to the outside of the housing bottom, wherein the copper circuit layer also be attached to the thermal conductive adhesion; and a plurality of LED chips, disposed on the copper circuit layer, and entering the housing interior by way of a light emitting surface thereof passing through the plurality of holes, respectively;
wherein when the LED chips emit light, the thermal conductive medium conducts the heat produced by the LED chips to the edge of the main frame through a high efficiency thermal conducting way, so that the heat is dissipated via the main frame.

The second objective of the present invention is to provide an integrated backlight module with good heat equalization and heat dissipation performance, in which, a thermal conductive medium and at least one light source module are integrated in a main frame, moreover, a plurality of thermal conductive belts are laid on a baseplate of the main frame; therefore, through the thermal conductive medium, the heat produced by the light source module can be conducted to the main frame, and the heat can be further dissipated via the main frame by way of thermal convection, furthermore, the heat conducted to the main frame can be distributed over the baseplate through the thermal conductive belts, so as to accomplish a high efficient heat equalization performance.

Therefore, to achieve the second objective of the present invention, the inventor proposes an integrated backlight module with good heat equalization and heat dissipation performance, comprising:
a main frame, having at least one edge and good heat dissipation property;
a thermal conductive material, simultaneously disposed on the edge and a baseplate of the main frame;
a plurality of thermal conductive belts, disposed on the edge and the baseplate of the main frame through the thermal conductive material; and
at least one light source module, disposed on the edge of the main frame and adopted for providing a backlight source to a light guiding plate in the main frame, the light source module comprising: a reflective member, formed as a housing, and the housing has a plurality of holes disposed in a housing bottom thereof; a copper circuit layer, attached to the outside of the housing bottom, moreover, the copper circuit layer also be disposed on the thermal conductive belts via a thermal conductive adhesion; and a plurality of LED chips, disposed on the copper circuit layer, and entering the housing interior by way of a light emitting surface thereof passing through the plurality of holes, respectively;
wherein the thermal conductive belts and the light source module are steadily disposed on the edge of the main frame through the thermal conductive material, therefore, when the LED chips emit light, the thermal conductive belts and the thermal conductive material conduct the heat produced by the LED chips to the edge of the main frame through a high efficiency thermal conducting way, so that the heat is dissipated through the main frame; moreover, by way of the thermal conductive belts and the thermal conductive material, the heat can be further evenly distributed over the baseplate.

The third objective of the present invention is to provide an integrated backlight module with good heat equalization and heat dissipation performance, in which, a thermal conductive medium and at least one light source module are integrated in a main frame, moreover, a reflective layer is formed in a housing of the light source module by way of coating or spray, so that the conventional punched-molding process for the reflective member can be reduced.

Therefore, to achieve the third objective of the present invention, the inventor proposes an integrated backlight module with good heat equalization and heat dissipation performance, comprising:
a main frame, having at least one edge and good heat dissipation property;
a welded material, welded to the edge of the main frame;
a thermal conductive medium, attached to the welded material by a second surface thereof; and
at least one light source module, attached to a first surface of the thermal conductive medium via a thermal conductive adhesion, so as to provide a backlight source to a light guiding plate in the main frame, the light source module comprises: a housing, having a plurality of holes disposed in a housing bottom thereof; a reflective layer, formed in the housing; a copper circuit layer, attached to the outside of the housing bottom, and the copper circuit layer also be attached to the first surface of the thermal conductive medium through the thermal conductive adhesion; and a plurality of LED chips, disposed on the copper circuit layer, and entering the housing interior by way of a light emitting surface thereof passing through the plurality of holes, respectively;
wherein when the LED chips emit light, the thermal conductive medium conducts the heat produced by the LED chips to the edge of the main frame through a high efficiency thermal conducting way, so that the heat is dissipated through the main frame.

The fourth objective of the present invention is to provide an integrated backlight module with good heat equalization and heat dissipation performance, in which, a plurality of thermal conductive media and at least one light source module are integrated in a main frame, moreover, a plurality of holes are formed on a baseplate of the main frame for facilitating the plurality of thermal conductive media extend to the outside of the main frame, so that, the heat produced by the light source module can be effectively dissipated by way of the thermal convection in the external air.

Therefore, to achieve the fourth objective of the present invention, the inventor proposes an integrated backlight module with good heat equalization and heat dissipation performance, comprising:
a main frame, comprising at least one edge and one baseplate, wherein the baseplate has a plurality of first holes;
at least one light source module, disposed on the baseplate by way of being attached to the edge of the main frame, and used for providing a backlight source to a light guiding plate in the main frame, the light source module comprises: a housing, having a plurality of second holes disposed in a housing bottom thereof; a reflective layer, formed in the housing; a copper circuit layer, attached to the outside of the housing bottom via an insulating adhesion, and
having a plurality of third holes opposite to the first holes and the second holes; and a plurality of LED chips, having a heat sink and a plurality of welding points, the LED chips are disposed on the copper circuit layer by way of the welding points; and
a plurality of thermal conductive media, passing through the first holes, the second holes and the third holes, and entering the housing interior from the outside of the baseplate, so as to contact the heat sinks of the LED chips through a heat dissipating medium, respectively;
wherein when the LED chips emit light, the thermal conductive media conduct the heat produced by the LED chips to the edge of the main frame through a high efficiency thermal conducting way, so that the heat is dissipated through the main frame; moreover, by way of the thermal convection between the thermal conductive media and the external air, the heat can be simultaneously dissipated.

### BRIEF DESCRIPTION OF THE SEVERAL VIEWS OF THE DRAWINGS

The invention as well as a preferred mode of use and advantages thereof will be best understood by referring to the following detailed description of an illustrative embodiment in conjunction with the accompanying drawings, wherein:

FIG. 1 is an assembled schematic diagram of a conventional LED backlight module and a main frame of an LCD display;

FIG. 2 is a second assembled schematic diagram of the conventional LED backlight module and the main frame of the LCD display;

FIG. 3 is a stereo view of a first embodiment of an integrated backlight module with good heat equalization and heat dissipation performance according to the present invention;

FIG. 4 is a side view of the first embodiment of the integrated backlight module with good heat equalization and heat dissipation performance;

FIG. 5 is the side view of a second embodiment of the integrated backlight module with good heat equalization and heat dissipation performance according to the present invention;

FIG. 6 is the stereo view of a third embodiment of the integrated backlight module with good heat equalization and heat dissipation performance according to the present invention;

FIG. 7 is the side view of the third embodiment of the integrated backlight module with good heat equalization and heat dissipation performance;

FIG. 8 is a second side view of the third embodiment of the integrated backlight module with good heat equalization and heat dissipation performance according to the present invention;

FIG. 9 is the side view of a fourth embodiment of the integrated backlight module with good heat equalization and heat dissipation performance according to the present invention;

FIG. 10 is the second side view of the fourth embodiment of the integrated backlight module with good heat equalization and heat dissipation performance;

FIG. 11 is the side view of a fifth embodiment of the integrated backlight module with good heat equalization and heat dissipation performance according to the present invention;

FIG. 12 is the second side view of the fifth embodiment of the integrated backlight module with good heat equalization and heat dissipation performance according to the present invention;

FIG. 13 is the side view of a sixth embodiment of the integrated backlight module with good heat equalization and heat dissipation performance according to the present invention;

FIG. 14 is the stereo view of a seventh embodiment of the integrated backlight module with good heat equalization and heat dissipation performance according to the present invention;

FIG. 15 is the side view of the seventh embodiment of the integrated backlight module with good heat equalization and heat dissipation performance;

FIG. 16 is the second side view of the seventh embodiment of the integrated backlight module with good heat equalization and heat dissipation performance;

FIG. 17 is the side view of an eighth embodiment of the integrated backlight module with good heat equalization and heat dissipation performance according to the present invention;

FIG. 18 is the side view of a ninth embodiment of the integrated backlight module with good heat equalization and heat dissipation performance according to the present invention;

FIG. 19 is the side view of a tenth embodiment of the integrated backlight module with good heat equalization and heat dissipation performance according to the present invention; and

FIGs. 20A and 20B are the side view of the 11th embodiment of the integrated backlight module with good heat equalization and heat dissipation performance according to the present invention.

### DETAILED DESCRIPTION OF THE INVENTION

To more clearly describe an integrated backlight module with good heat equalization and heat dissipation performance according to the present invention, embodiments of the present invention will be described in detail with reference to the attached drawings hereinafter.

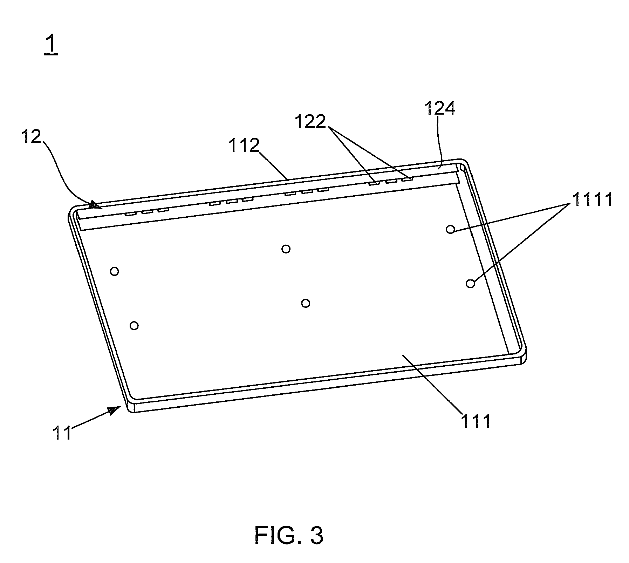

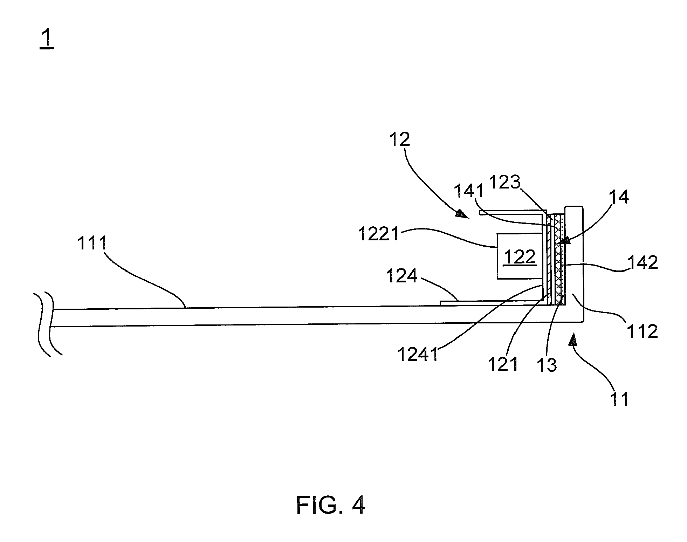

Please refer to FIG. 3 and FIG. 4 together, which illustrate a stereo view and a side view of the first embodiment of the integrated backlight module with good heat equalization and heat dissipation performance, respectively. As shown in FIG. 3 and FIG. 4, the integrated backlight module 1 with good heat equalization and heat dissipation performance includes: a main frame 11, a light source module 12, a thermal conductive medium 14, and a welded material 13, wherein the main frame 11 is a material having good heat dissipation, such as iron, aluminium and ceramics. Moreover, as shown in FIG. 3, one edge 112 of the main frame is adopted for disposing the light source module 12, and a baseplate 111 of the main frame 11 includes a plurality of threaded holes 1111, wherein the threaded holes 1111 is used for assembling the main frame 11 and an LCD display.

Continuously referring to FIG. 3 and FIG. 4, the welded material 13 can be a low temperature solder or a high temperature solder, which is welded to the edge 112 of the main frame 11. The thermal conductive medium 14 is attached to the welded material 13 by a second surface 142 thereof, besides, the light source module 12 is attached to a first surface 141 of the thermal conductive medium 14 via a thermal conductive adhesion 123 and used for providing a backlight source to a light guiding plate in the main frame 11, in which the thermal conductive adhesion 123 is capable of being locally attached or fully attached to the first surface 141. The light source module 12 includes: a reflective member 124, formed as a housing, and the housing having a plurality of holes disposed in a housing bottom 1241 thereof; a copper circuit layer 121, attached to the outside of the housing bottom 1241, and the copper circuit layer 121 also be attached to the thermal conductive adhesion 123; and a plurality of LED chips 122, disposed on the copper circuit layer 121, and enter the housing interior by way of a light emitting surface 1221 thereof passes through the plurality of holes, respectively.

What must the additional remarks is that, for the first embodiment of the integrated backlight module 1' of the present invention, the housing formed by the reflective member 124 can be a 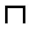 -shaped housing or a L-shaped housing; moreover, the thermal conductive medium 14 can be the metals consisting of: copper, aluminium with a nickel-plating formed on one surface thereof, aluminium with a copper-plating formed on one surface thereof, and nickel aluminium alloy. For example, if the thermal conductive medium 14 is the nickel aluminium alloy, the surface of the thermal conductive medium 14 is not need to be proceed; however, if the thermal conductive medium 14 is aluminium, then the surface of the thermal conductive medium 14 is need to be completed a nickel-plating process or a copper-plating process, such that the thermal conductive medium 14 can be welded to the edge 112.

Thus, through the above descriptions, the framework of the first embodiment for the integrated backlight module 1 is completely disclosed. For the first embodiment of the integrated backlight module 1, when the LED chips 122 emit light, the heat produced by the LED chips 122 is conducted to the thermal conductive medium 14 via the copped circuit layer 121 and the thermal conductive adhesion 123; furthermore, since the thermal conductive medium 14 is completely attached to the inner surface of the edge 112 by way of welding, the gap is not produced between the thermal conductive medium 14 and the edge 112. Thus, based on this factor, when the thermal conductive medium further transfers the heat to the main frame 11, the process of the heat conduction would not receive hindrance caused by the air thermal resistance, so that the thermal conductive medium 14 is able to conduct the heat produced by the LED chips to the edge 112 of the main frame 11 through a high efficiency thermal conducting way, and the heat can be dissipated via the main frame 11.

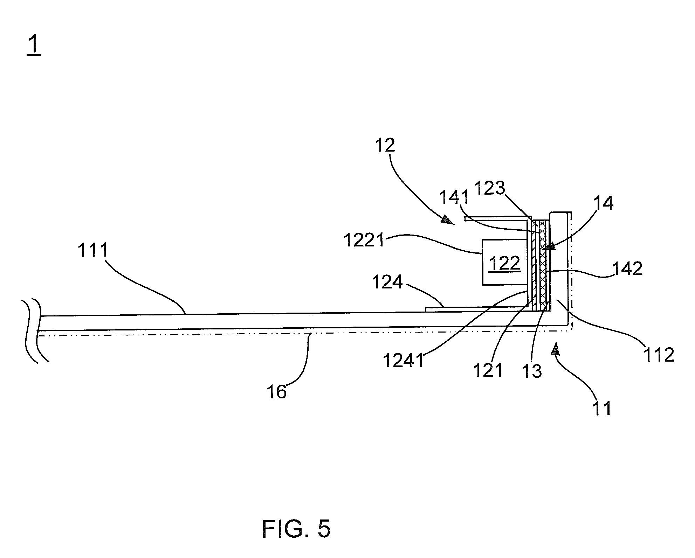

Moreover, for increasing the heat dissipation efficiency of the main frame 11, the present invention further provides a second embodiment for the integrated backlight module with good heat equalization and heat dissipation performance. Please refer to FIG. 5, which illustrates the side view of the second embodiment of the integrated backlight module with good heat equalization and heat dissipation performance. As shown in FIG. 5, by way of including a thermal radiative material 16 into the above-mentioned first embodiment, the framework of the second embodiment for the integrated backlight module is carried out. The thermal radiative material 16 can be a white paint or a nano diamond, and is locally coated or fully coated on the outside surface of the main frame 11. For the second embodiment of the integrated backlight module 1, when the main frame 11 dissipates heat, the thermal radiative material 16 would help the main frame 11 to dissipate the heat by way of thermal radiation and thermal convection.

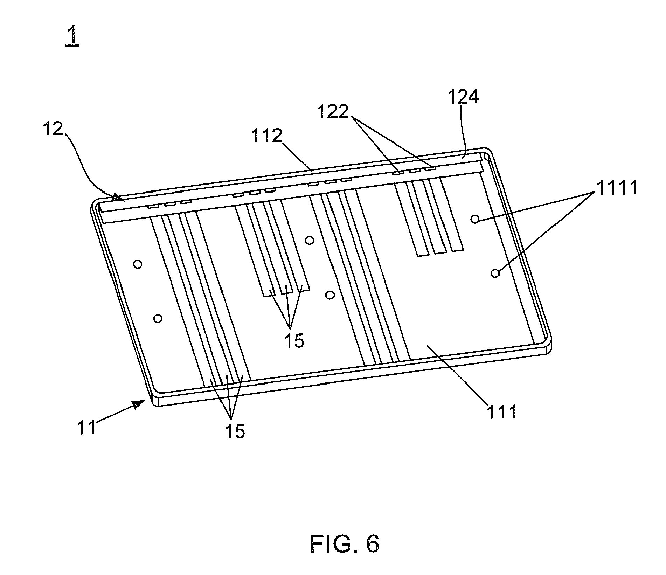

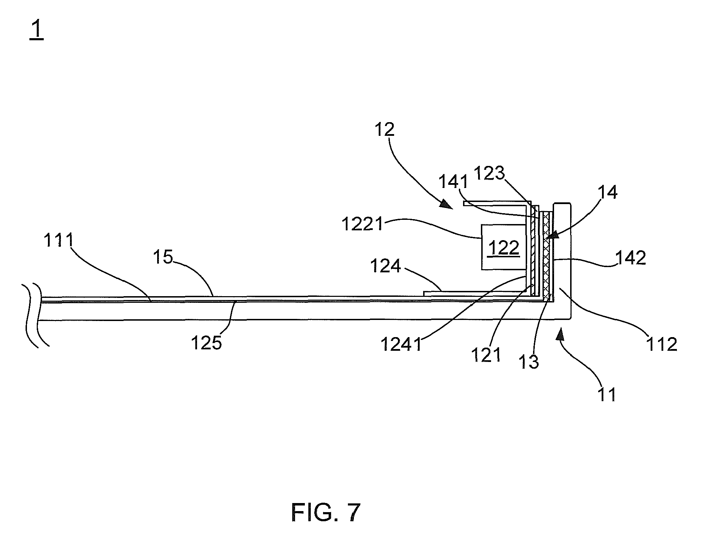

Besides, in the first embodiment of the integrated module 1, although the heat transferred to the edge 112 can be dissipated through the thermal convection, the remaining heat accumulating in the edge 112 would produce a temperature difference between the edge 112 and the baseplate 111. For this reason, the present invention further provides a third embodiment of the integrated backlight module with good heat equalization and heat dissipation performance. Please refer to FIG. 6 and FIG. 7 together, which illustrate the stereo view and the side view of the third embodiment of the integrated backlight module with good heat equalization and heat dissipation performance. As shown in FIG. 6 and FIG. 7, by way of including a plurality of thermal conductive belts 15 into the above-mentioned first embodiment, the third embodiment of the integrated backlight module 1 is finished. In which, the plurality of thermal conductive belts 15 are disposed on the edge of the main frame 11 and also simultaneously laid on the baseplate 111 of the main frame 11, the thermal conductive belts 15 are used for evenly distributing the heat conducted to edge 112 over the baseplate 111. It is needed to know that the manufacture material of the thermal conductive belt 15 can be copper, aluminium and graphite; in addition, the thermal conductive belts 15 can be locally laid or overall laid on the baseplate 111.

As shown in FIG. 6 and FIG. 7, through the thermal conductive belts 15, the heat in the main frame 11 transferred by the thermal conductive medium 14 is able to be evenly distributed on the baseplate 111, such that the temperature difference would not be produced between any two positions in the baseplate 111. Thus, the integrated backlight module 1 of the present invention has the heat equalization and heat dissipation properties, and is capable of being applied in the LCD display, so as to solve the heat accumulation exists between the conventional LED backlight module and the main frame in the LCD display.

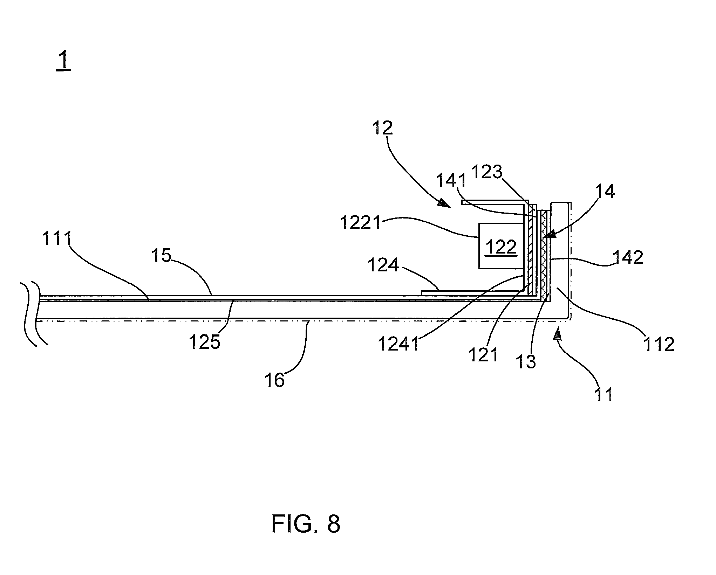

Continuously referring to FIG. 8, which illustrates a second side view of the third embodiment of the integrated backlight module with good heat equalization and heat dissipation performance. For making the third embodiment of the integrated backlight module 1 perform more better heat dissipation effect, similar to the second embodiment, herein the thermal radiative material 16 can also be included into the third embodiment of the integrated backlight module 1, and the thermal radiative material 16 is capable of helping the main frame 11 to dissipate heat through the thermal radiation and the thermal convection between the thermal radiative material 16 and the external air.

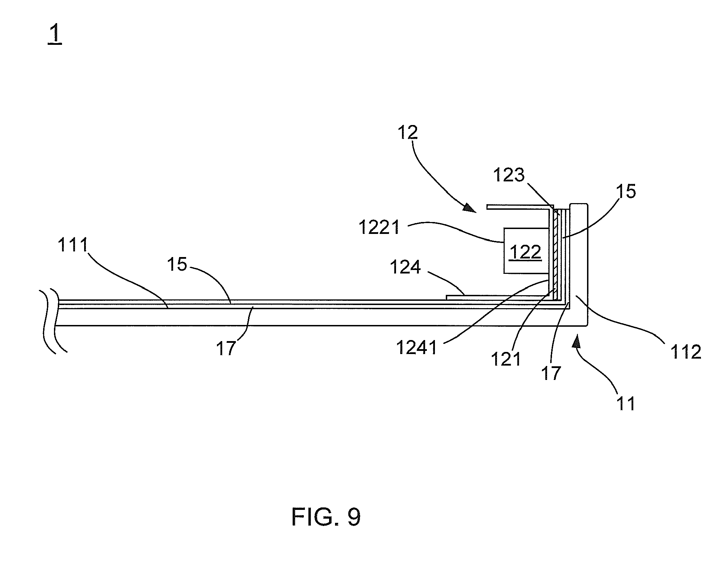

All the above-mentioned first, second and third embodiments of the integrated backlight module 1 utilize the thermal conductive medium 14 to conduct heat; however, it still has other means can be used for conducting the heat produced by the light source module 12 to the edge 112 of the main frame 11. Therefore, the present invention further provides a fourth embodiment for the integrated module 1, so as to conduct the heat produced by the light source module 12 to the edge 112 through a different means. Please refer to FIG. 9, which illustrates the side view of the fourth embodiment of the integrated backlight module with good heat equalization and heat dissipation performance. As shown in FIG. 9, the fourth embodiment of the integrated backlight module 1 includes: the main frame 11, a thermal conductive material 17, the plurality of thermal conductive belts 15, and the light source module 12.

The framework and the components of the main frame 11, the thermal conductive belts 15 and the light source module 12 are the same to the main frame 11, the thermal conductive belts 15 and the light source module 12 used in the above-mentioned second embodiment. In the fourth embodiment of the integrated backlight module 1, as shown in FIG. 9, the thermal conductive material 17 is simultaneously disposed on the edge 112 and the baseplate 111 of the main frame 11, besides, the thermal conductive belts 15 are disposed on the edge 112 and the baseplate 111 of the main frame 11 via the thermal conductive material 17. In addition, through the thermal conductive adhesion 123 attached to the copper circuit layer 121, the light source module 12 is attached to the thermal conductive belts 15, and furthermore, the light source module 12 is disposed on the edge 112 via the thermal conductive material 17.

In the fourth embodiment of the integrated backlight module 1, the thermal conductive belts 15 and the light source module 12 are steadily disposed on the edge 112 of the main frame 11 through the thermal conductive material 17; moreover, by way of such combination, when the LED chips 122 emit light, the thermal conductive belts 15 conduct the heat produced by the LED chips 122 to the edge 112 of the main frame 11 through the high efficiency thermal conducting way, so that the heat is dissipated through the main frame 11; Besides, by way of the thermal conductive belts 15 and the thermal conductive material 17, the heat can be further evenly distributed over the baseplate 111, so as to prevent the temperature difference produced between any two positions in the main frame 11.

Herein it is must noted that, in the fourth embodiment of the integrated backlight module, the thermal conductive material 17 can be a thermal conductive adhesion or a solder; besides, the thermal conductive material 17 is not limited to be overall laid on the baseplate 111, it can also be locally laid on the baseplate 111; Thus, it is easily aware that the thermal conductive belts 15 disposed on the thermal conductive material 17 can be locally or fully laid on the baseplate 111.

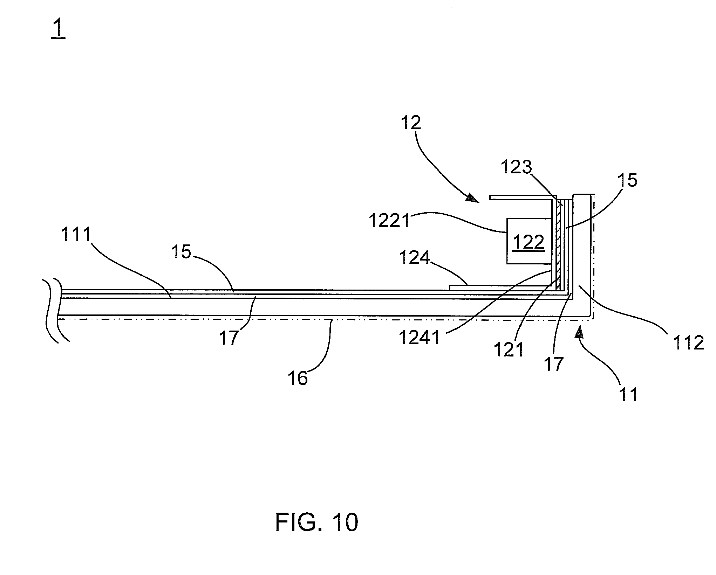

Continuously referring to FIG. 10, which illustrates the second side view of the fourth embodiment of the integrated backlight module with good heat equalization and heat dissipation performance. For making the fourth embodiment of the integrated backlight module 1 perform more better heat dissipation effect, herein the thermal radiative material 16 also can be included into the fourth embodiment of the integrated backlight module 1, wherein the thermal radiative material 16 is locally coated or overall coated on the outside surface of the main frame 11. The thermal radiative material 16 is capable of helping the main frame 11 to dissipate heat through the thermal radiation and the thermal convection between the thermal radiative material 16 and the external air.

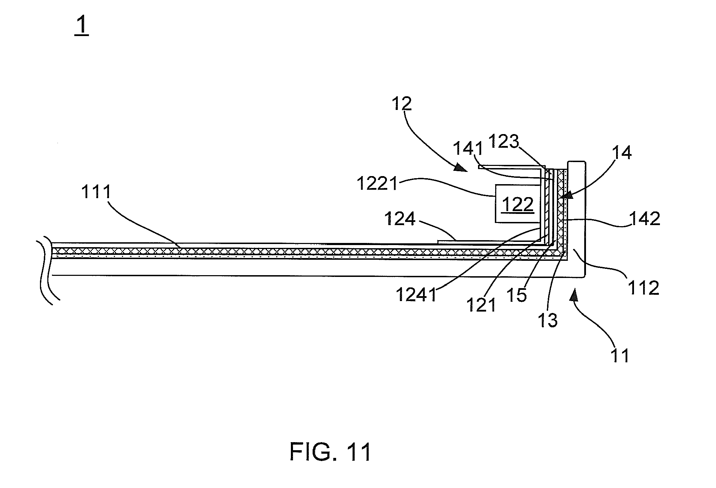

Moreover, the integrated backlight module with good heat equalization and heat dissipation performance of the present invention further includes other embodiments; Please refer to FIG. 11, which illustrates the side view of a fifth embodiment of the integrated backlight module with good heat equalization and heat dissipation performance according to the present invention. As shown in FIG. 11, the fifth embodiment of the integrated backlight module 11 includes: the main frame 11, the welded material 13, the thermal conductive medium 14, the plurality of thermal conductive belts 15, and the light source module 12, wherein the welded material 13 is welded to the edge 112 and the baseplate 111, the thermal conductive medium 14 is attached to the welded material 13, and the plurality of thermal conductive belts 15 are attached to the thermal conductive medium 14. Eventually, through attached the thermal conductive adhesion 123 to the copper circuit layer 121 and the thermal conductive belts 15, the light source module 12 is disposed on the edge 112 of the main frame 11. In addition, the same to above embodiments, all the welded material 13, the thermal conductive medium 14 and thermal conductive belts 15 used in the firth embodiment of the integrated backlight module 1 can be locally disposed or fully disposed on the baseplate 111 by way of welding.

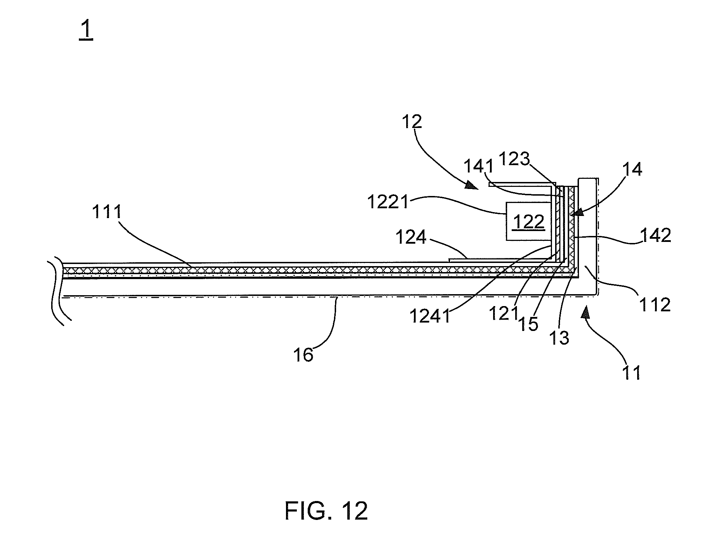

Furthermore, please refer to FIG. 12, which illustrates the second side view of the fifth embodiment of the integrated backlight module with good heat equalization and heat dissipation performance. As shown in FIG. 12, For making the fifth embodiment of the integrated backlight module 1 perform more better heat dissipation effect, the thermal radiative material 16 can be included into the fifth embodiment of the integrated backlight module 1, such that the thermal radiative material 16 is used for helping the main frame 11 to dissipate heat through the thermal radiation and the thermal convection between the thermal radiative material 16 and the external air.

Thus, there are many embodiments of the integrated backlight module with good heat equalization and heat dissipation performance have been disclosed; however, as shown in FIGs. 3-12, the light source module 12 used in the integrated backlight module 1 is a direct-type light source module. In view of this part, it must to explain that the light source module 12 used in the integrated backlight module 1 is not limited the direct-type light source module, in reality an edge-type light source module can also be implemented as the light source module 12 applied in the integrated backlight module 1 for providing the backlight source to the light guiding plate.

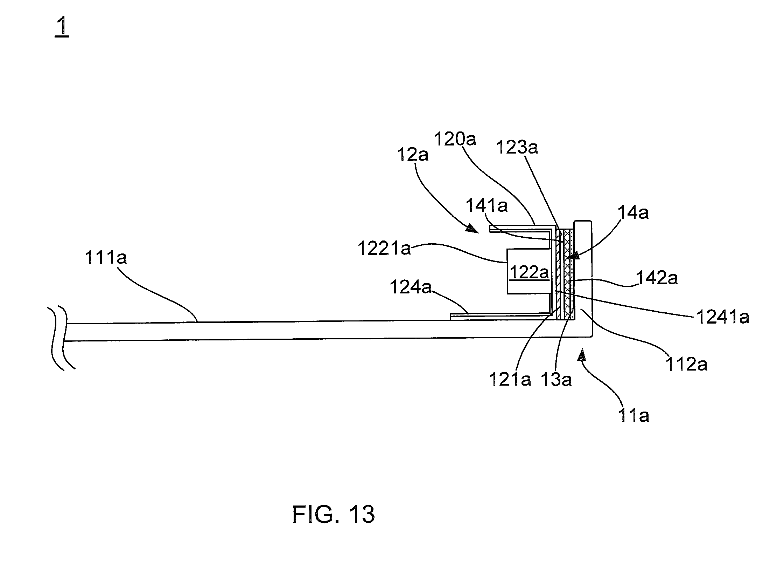

Besides, the conventional LED backlight module generally uses a metal housing, for example, an aluminium housing, to accommodate the LED chips; So that, for facilitating the manufacture process of the integrated backlight module proposed by the present invention be compatible with the conventional manufacture process, the embodiments with metal housing for the integrated backlight module with good heat equalization and heat dissipation performance will be disclosed in following descriptions. Please refer to FIG. 13, which illustrates the side view of a sixth embodiment of the integrated backlight module with good heat equalization and heat dissipation performance according to the present invention. As shown in FIG. 13, the sixth embodiment of the integrated backlight module 1 includes: a mainframe 11a, a welded material 13 a, a thermal conductive medium 14a, and a light source module 12a.

The mainframe 11a has at least one edge 112a and good heat dissipation property, and the material thereof can be iron, aluminium and ceramics. The welded material 13a is a low temperature solder or a high temperature solder, which is welded to the edge 112a of the mainframe 11a. The thermal conductive medium 14a is attached to the welded material 13a by a second surface thereof 142a.

The light source module 12a can be a direct-type light source module or an edge-type light source module, which is attached to the first surface 141a of the thermal conductive medium 14a via a thermal conductive adhesion 123a, and used for providing a backlight source to a light guiding plate in the mainframe 11a. In which, the thermal conductive adhesion 123a can be locally attached or fully attached on the first surface 141a. The light source module 12a includes: a housing 120a, a reflective layer 124a, a copper circuit layer 121a, and a plurality of LED chips 122a, wherein the housing 120a has a plurality of holes disposed in a housing bottom 1241a thereof. Differing from the conventional LED backlight module, in the sixth embodiment of the integrate backlight module 1, the reflective layer 124a is formed in the housing 120a by way of coating, painting or spray; therefore, a punched-molding process for the reflective member is unnecessary before the reflective layer 124a formed in the housing 120a. The copper circuit layer 121a is attached to the outside of the housing bottom 124a, and the copper circuit layer 121a is also attached to the first surface 141a of the thermal conductive medium 14a through the thermal conductive adhesion 123a. The plurality of LED chips 122a are disposed on the copper circuit layer 121a, and enter the housing 120a interior by way of a light emitting surface 1221a thereof passing through the plurality of holes, respectively.

Thus, through the above descriptions, the framework of the sixth embodiment of the integrated backlight module 1 with good heat equalization and heat dissipation performance has been disclosed. As shown in FIG. 6 and FIG. 13, the same to the first embodiment (i.e., the embodiment having the housing formed by the reflective member), in the sixth embodiment of the integrated backlight module 1, when the LED chips 122a emit light, the thermal conductive medium 14a conduct the heat produced by the LED chips 122a to the edge 112a of the main frame 11a through a high efficiency thermal conducting way, so that the heat is dissipated through the main frame 11a.

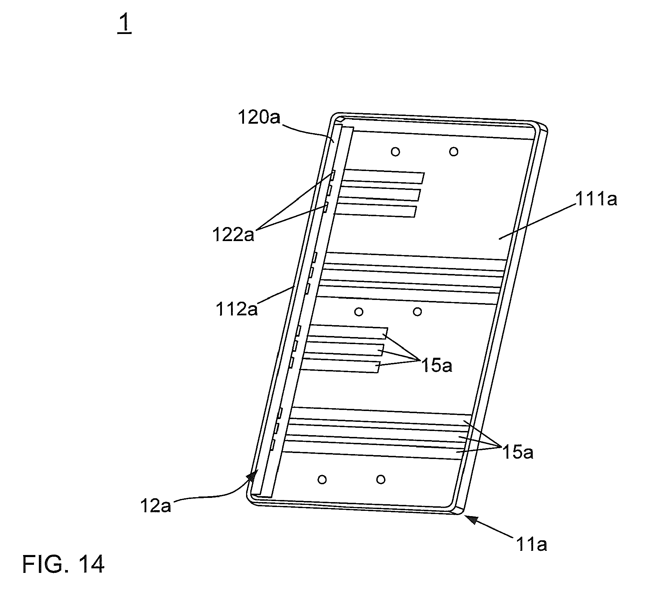

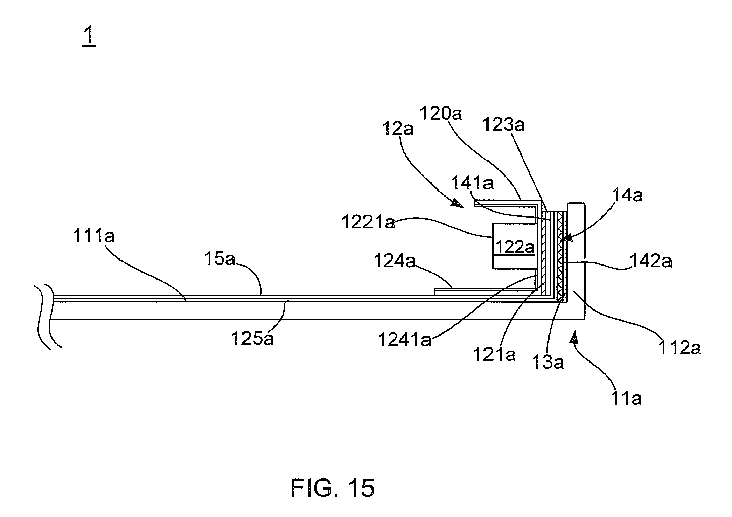

Moreover, for the sixth embodiment of the integrated backlight module 1, although the heat transferred to the edge 112a can be dissipated through the thermal convection, the remaining heat accumulating in the edge 112a would produce a temperature difference between the edge 112a and the baseplate 111a. For this reason, the present invention further provides a seventh embodiment for the integrated backlight module with good heat equalization and heat dissipation performance. Please refer to FIG. 14 and FIG. 15 together, which illustrate the stereo view and the side view of the seventh embodiment of the integrated backlight module with good heat equalization and heat dissipation performance according to the present invention. As shown in FIG. 14 and FIG. 15, by way of including a plurality of thermal conductive belts 15a into the sixth embodiment, the framework of the seventh embodiment of the integrated backlight module 1 is carried out. In which, the manufacture material of the thermal conductive belt 15a can be copper, aluminium and graphite, and the plurality of thermal conductive belts 15a are disposed on the edge 112a of the main frame 11a, moreover, the thermal conductive belts 15a are also laid on the baseplate 111a of the main frame 11a via a thermal conductive adhesion 15a. In the sixth embodiment, the thermal conductive belts 15a are used for evenly distributing the heat accumulating in the edge 122a over the baseplate 111a. In addition, it must to note that, the thermal conductive belts 15a are not limited to be overall laid on the baseplate 111a, which can also be locally laid on the baseplate 111a.

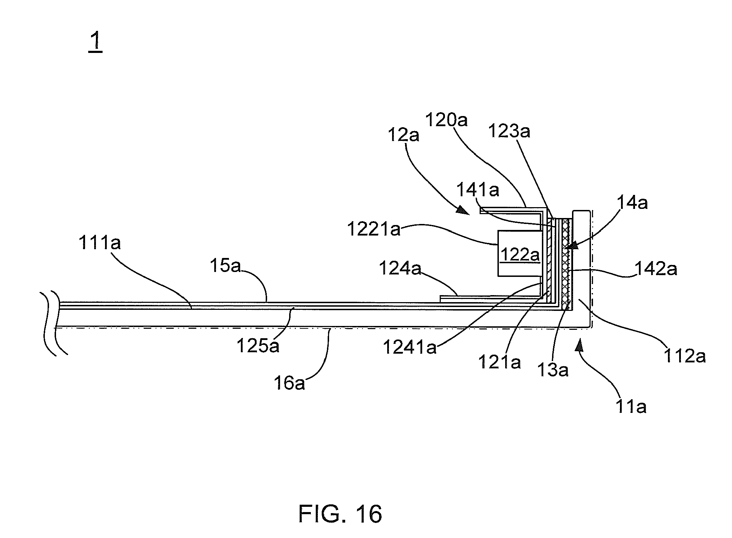

Continuously referring to FIG. 16, which illustrates the second side view of the seventh embodiment of the integrated backlight module with good heat equalization and heat dissipation performance. Similar to the above-mentioned second embodiment, for the seventh embodiment of the integrated backlight module 1, the thermal radiative material 16 can also be coated on the outside surface of the main frame 11a, therefore the thermal radiative material 16a is able to help the main frame 11a to dissipate heat through the thermal radiation and the thermal convection between the thermal radiative material 16a and the external air. In addition, the same to the above-mentioned second embodiment, in the seventh embodiment of the integrated backlight module 1, the thermal radiative material 16a is locally coated or overall coated on the outside surface of the mainframe 11a.

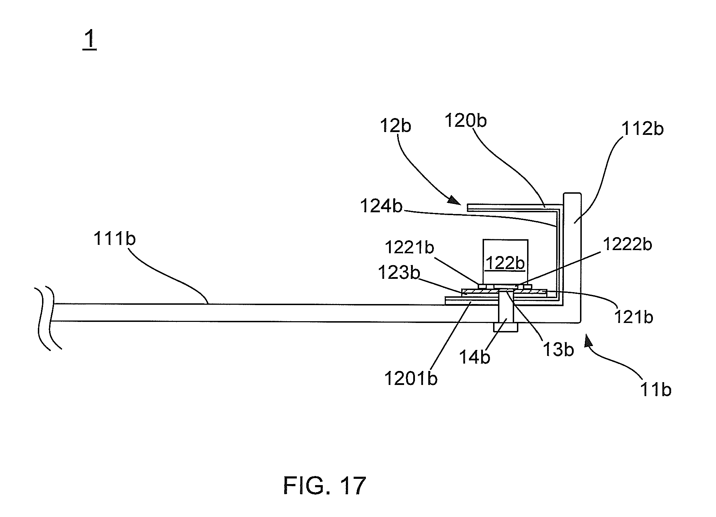

The present invention also provides an eighth embodiment for the integrated backlight module with good heat equalization and heat dissipation performance. Please refer to FIG. 17, which illustrates the side view of the eighth embodiment of the integrated backlight module with good heat equalization and heat dissipation performance according to the present invention. As shown in FIG. 17, the eighth embodiment of the integrated backlight module 1 includes: a main frame 11b, a light source module 12b and a plurality of thermal conductive media 14a, wherein the material of the main frame 14b can be iron, aluminium or ceramics, and the main frame 14b has at least one edge 112b and a baseplate 111b with a plurality of first holes.

The light source module 12b is disposed on the baseplate 111b by way of being attached to the edge 112b of the main frame 11b, and is used for providing a backlight source to a light guiding plate in the main frame 11b, the light source module 12b includes: a housing 120b, a reflective layer 124b, a copper circuit layer 121b, and a plurality of LED chips 122b. The housing 120b has a plurality of second holes disposed in a housing bottom 1201b thereof, and is able to be manufactured to a 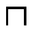 -shaped housing or a L-shaped housing by using the copper, aluminium, electrolytic zinc steel plate, or hot-dip galvanization steel plate as the manufacture material thereof. The reflective layer 124b is formed in the housing 120b. The copper circuit layer 121b is attached to the outside of the housing bottom 1201b via an insulating adhesion 123b and has a plurality of third holes opposite to the first holes and the second holes. The plurality of LED chips 122b include a heat sink 1222b and two welding points 1221b, the LED chips 122b are disposed on the copper circuit layer 121b by way of the welding points 1221b.

The plurality of thermal conductive media 14b pass through the first holes, the second holes and the third holes, and enter the housing 120b interior from the outside of the baseplate 111 b, so as to contact the heat sinks 1222b of the LED chips 122b through a heat dissipating medium 13b, respectively, in which the heat dissipating medium 13b is a thermal paste or a solder. Moreover, the same to the above-mentioned embodiments, the thermal conductive medium 14b can be a copper, aluminium with a nickel-plating formed on one surface thereof, aluminium with a copper-plating formed on one surface thereof, or nickel aluminium alloy; Besides, in the eighth embodiment of the integrated backlight module 1, the thermal conductive medium 14b can further be made as a rivet form or a columnar form for facilitating the thermal conductive medium 14b pass through the first holes, the second holes and the third holes. Therefore, for the eighth embodiment of the integrated backlight module 1, when the LED chips 122b emit light, the thermal conductive media 14b conduct the heat produced by the LED chips 122b to the edge 112b of the main frame 11b through a high efficiency thermal conducting way, so that the heat is dissipated through the main frame 11b; furthermore, by way of the thermal convection between the thermal conductive media 14b and the external air, the heat can be simultaneously dissipated.

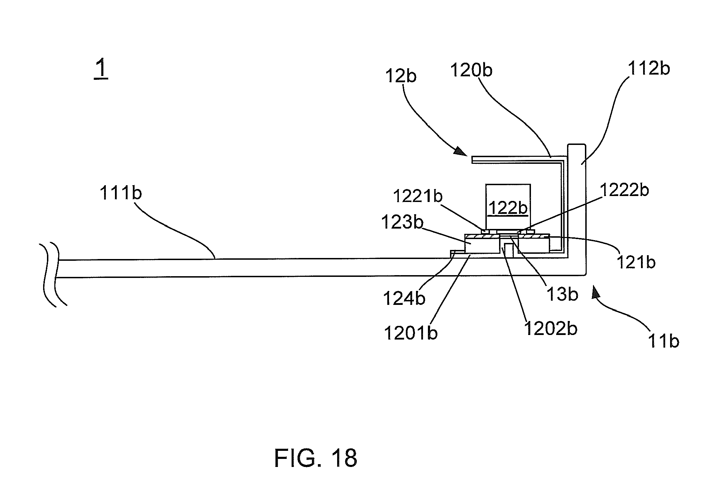

For the eighth embodiment of the integrated backlight module 1, it must fabricates the opposite first, second and third holes in the baseplate 111b, the housing 120b and the copper circuit layer 121b, respectively, and that may be difficult in manufacturing. For this reason, the present invention further provides a ninth embodiment for the integrated backlight module with good heat equalization and heat dissipation performance. Please refer to FIG. 18, which illustrates the side view of the ninth embodiment of the integrated backlight module with good heat equalization and heat dissipation performance according to the present invention. As shown in FIG. 18, the framework of the ninth embodiment of the integrated backlight module 1 is similar to the eighth embodiment thereof, however, what is difference between the ninth embodiment and the eighth embodiment is that the holes are not made in the baseplate 111b and the housing bottom 1201b.

In the ninth embodiment of the integrated backlight module 1, a plurality of protrusions 1202b are formed in the housing bottom 1201b; moreover, through the heat dissipating medium 13b, the protrusions 1202b contact the heat sinks 1222b of the LED chips 122b by way of passing through the plurality of third holes of the copper circuit layer 121b. The plurality of protrusions 1202b are used as the thermal conductive media, so that, when the LED chips 122b emit light, the protrusions 1202b conduct the heat produced by the LED chips 122b to the housing 120b, and subsequently, the housing 120b transfers the heat to the edge 112b, so as to dissipate the heat through the mainframe 11b.

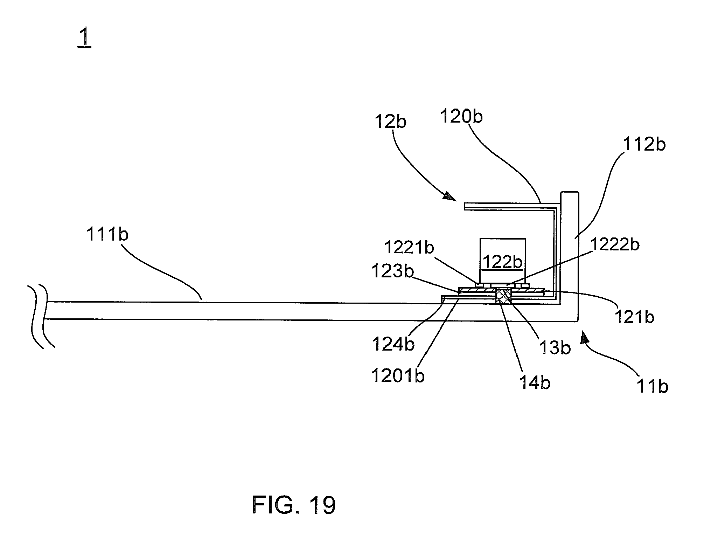

In addition, considering forming the protrusions 1202b in the housing bottom 1201b is complex, the present invention further provides a tenth embodiment for the integrated backlight module with good heat equalization and heat dissipation performance. Please refer to FIG. 19, which illustrates the side view of the tenth embodiment of the integrated backlight module with good heat equalization and heat dissipation performance according to the present invention. As shown in FIG. 19, the framework of the tenth embodiment of the integrated backlight module 1 is similar to the ninth embodiment thereof, however, what is difference between the tenth embodiment and the ninth embodiment is that: in tenth embodiment of the integrated backlight module 1, the protrusions 1202b are not formed on the housing bottom 1201b but the thermal conductive media 14b are directly disposed on the housing bottom 1201b. Besides, through the heat dissipating medium 13b, the thermal conductive media 14b contact the heat sinks 1222b of the LED chips 122b by way of passing through the plurality of third holes of the copper circuit layer 121b. So that, when the LED chips 122b emit light, the thermal conductive media 14b conduct the heat produced by the LED chips to the housing 120b through a high efficiency thermal conducting way, and then the housing 120b transfers the heat to the edge 112b, such that the heat is dissipated through the main frame 11b.

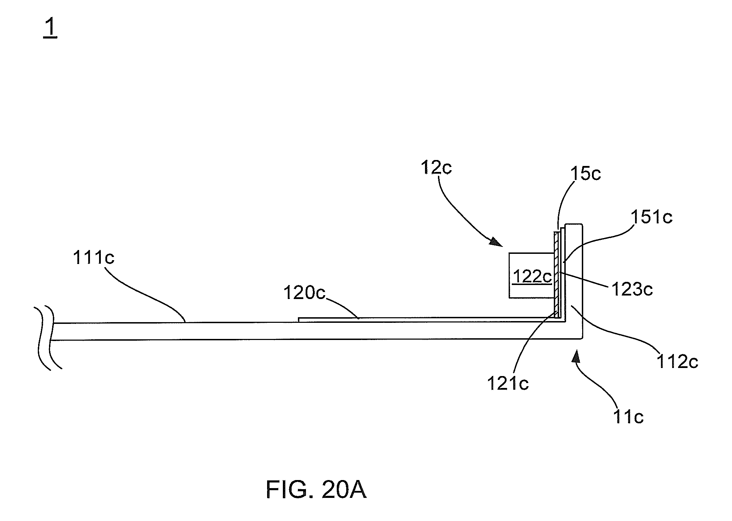

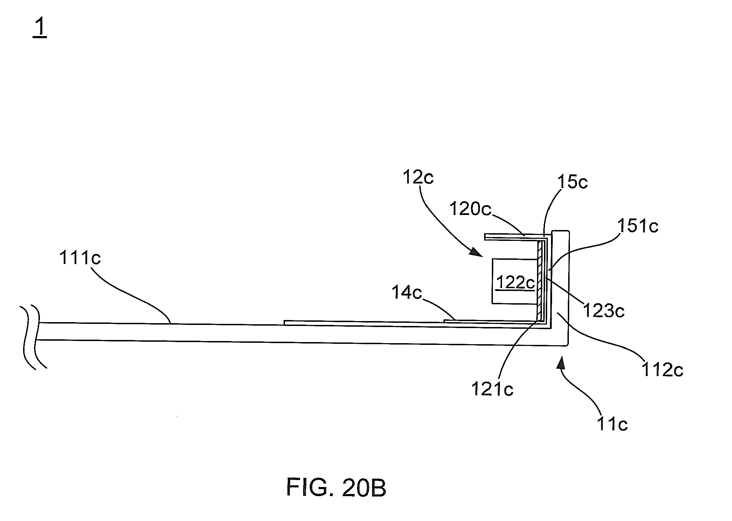

Furthermore, for increasing the process speed and manufacturing cost, the present invention further provides an 11th embodiment. Please refer to FIGs. 20A and 20B, which illustrate the side views of the 11th embodiment of the integrated backlight module with good heat equalization and heat dissipation performance according to the present invention. As shown in FIG. 20A, the 11th embodiment of the integrated backlight module 1 includes: a main frame 11c, a thermal conductive belt 15c and a light source module 12c, wherein the main frame 11c has a edge 112c and a baseplate 111c. The thermal conductive belt 15c has heat dissipation property and the manufacturing material thereof can be copper, aluminium or graphite. In the 11th embodiment of the integrated backlight module 1, the thermal conductive belt 15c is formed as an L-shaped housing and disposed on the edge 112c.

Referring to FIG. 20A again, the light source module 12c is disposed in the housing formed by the conductive belt 15c and used for providing a backlight source to a light guiding plate in the main frame 11c, the light source module 12c includes: a copper circuit layer 121c and a plurality of LED chips 122c, wherein the copper circuit layer 121c is disposed to a housing bottom 151c of the housing through a thermal conductive adhesion 123c, and the plurality of LED chips 122c are disposed on the copper circuit layer 121c. The LED chip 122c used in the light source module 12c can be a direct-type LED chip or an edge-type LED chip; nevertheless, the direct-type LED chip is used as the LED chip in the 11th embodiment of the integrated backlight module 1.

So that, for the 11th embodiment of the integrated backlight module 1, when the LED chips 122c emit light, the thermal conductive belt 15c conducts the heat produced by the LED chips 122c to the housing 120c by a high efficiency thermal conducting way, then the heat is transferred to the edge 112c of the main frame 11c via the housing 120c and is further dissipated through the main frame 11c. Moreover, it is must noted that the thermal conductive adhesion 123c is locally attached or fully attached on the housing bottom 151c.

Besides, as shown in FIG. 20B, for the 11th embodiment of the integrated backlight module 1, the thermal conductive belt 15c can also be formed as a 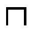 -shaped housing; moreover, for making the light source module 12c has more better light collecting effect, a reflective layer is formed in the interior of the housing formed by the thermal conductive belt 15c; therefore, that also facilitate the integrated backlight module 1 of the present invention get the better light collecting effect.

Thus, through the above embodiments, the integrated backlight module with good heat equalization and heat dissipation performance of the present invention has been completely and clearly disclosed. In summary, the present invention has the following advantages:
1. In the present invention, a thermal conductive medium and at least one light source are integrated in a main frame of the LCD display, so as to eliminate the gap existing between the light source and the main frame; so that, when the LED chips in the light source emit light, the heat produced by the LED chips can be conducted to the main frame via the thermal conductive medium by way of thermal convection, and be further dissipated by the main frame, so that the integrated backlight module performs a good heat dissipation effect.
2. In the present invention, a plurality of thermal conductive belts are laid on the baseplate of the mainframe, thus, through the thermal conduction of the thermal conductive belts, the remaining heat accumulating in the edge of the main frame is able to be evenly distributed over the baseplate, such that the integrated backlight module performs a good heat equalization effect.
3. Inheriting to above point 1, the heat dissipation effect performed by the integrated backlight module of the present invention is able to prevent the light guiding plate and the optical films from being broken by the heat accumulation.
4. Inheriting to above point 2, the heat equalization effect performed by the integrated backlight module of the present invention is capable of avoiding from the temperature difference occurs between two sides of the light guiding plate or the optical films caused by the heat accumulation.
5. The present invention provides multi embodiments for being applying to the LCD display with the direct-type light source module and the LCD display with the edge-type light source module.
6. Inheriting to above point 5, moreover, in the seventh embodiment provided by the present invention, a reflective layer is formed in a housing of the light source module by way of coating or spray, so that the conventional punched-molding process for the reflective member can be reduced.

The above description is made on embodiments of the present invention. However, the embodiments are not intended to limit scope of the present invention, and all equivalent implementations or alterations within the spirit of the present invention still fall within the scope of the present invention.

### Clauses

1. An integrated backlight module with good heat equalization and heat dissipation performance, comprising:
a main frame, having at least one edge and good heat dissipation property;
a welded material, being welded to the edge;
a thermal conductive medium, being attached to the welded material by a second surface thereof; and
at least one light source module, being attached to a first surface of the thermal conductive medium via a thermal conductive adhesion, and being used for providing a backlight source to a light guiding plate in the main frame, the light source module comprising:
   a reflective member, being formed as a housing, and the housing having a plurality of holes disposed in a housing bottom thereof;
   a copper circuit layer, being attached to the outside of the housing bottom, and the copper circuit layer also being attached to the thermal conductive adhesion; and
   a plurality of LED chips, being disposed on the copper circuit layer, and entering the housing interior by way of a light emitting surface thereof passing through the plurality of holes, respectively;
wherein when the LED chips emit light, the thermal conductive medium conducting the heat produced by the LED chips to the edge of the main frame through a high efficiency thermal conducting way, so that the heat is dissipated via the main frame.

2. The integrated backlight module with good heat equalization and heat dissipation performance of Clause 1, further comprising a plurality of thermal conductive belts, being disposed on the edge of the main frame and also simultaneously laid on a baseplate of the main frame, the thermal conductive belts being used for evenly distributing the heat conducted to edge over the baseplate.

3. The integrated backlight module with good heat equalization and heat dissipation performance of Clause 2, wherein the plurality of thermal conductive belts are laid on the baseplate by one way selected from the group consisting of: locally laid and overall laid.

4. The integrated backlight module with good heat equalization and heat dissipation performance of Clause 1, wherein the material of the main frame is selected from the group consisting of: iron, aluminium and ceramics.

5. The integrated backlight module with good heat equalization and heat dissipation performance of Clause 1, wherein the thermal conductive medium is selected from the group consisting of: copper, aluminium with a nickel-plating formed on one surface thereof, aluminium with a copper-plating formed on one surface thereof, and nickel aluminium alloy.

6. The integrated backlight module with good heat equalization and heat dissipation performance of Clause 1, wherein the housing formed by the reflective member is selected from the group consisting of: 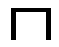 -shaped housing and L-shaped housing.

7. The integrated backlight module with good heat equalization and heat dissipation performance of Clause 1, wherein the welded material is selected from the group consisting of: low temperature solder and high temperature solder.

8. The integrated backlight module with good heat equalization and heat dissipation performance of Clause 2, wherein the manufacture material of the thermal conductive belt is selected from the group consisting of: copper, aluminium and graphite.

9. The integrated backlight module with good heat equalization and heat dissipation performance of Clause 1, wherein the light source module is selected from the group consisting of: direct-type light source module and edge-type light source module.

10. The integrated backlight module with good heat equalization and heat dissipation performance of Clause 1, further comprising a thermal radiative material coated on the outside surface of the main frame.

11. The integrated backlight module with good heat equalization and heat dissipation performance of Clause 10, wherein the thermal radiative material is selected from the group consisting of: white paint and nano diamond.

12. An integrated backlight module with good heat equalization and heat dissipation performance, comprising:
a main frame, having at least one edge and good heat dissipation property;
a thermal conductive material, being simultaneously disposed on the edge and a baseplate of the main frame;
a plurality of thermal conductive belts, being disposed on the edge and the baseplate of the main frame through the thermal conductive material; and
at least one light source module, being disposed on the edge of the main frame and adopted for providing a backlight source to a light guiding plate in the main frame, the light source module comprising:
   a reflective member, being formed as a housing, and the housing having a plurality of holes disposed in a housing bottom thereof;
   a copper circuit layer, being attached to the outside of the housing bottom, moreover, the copper circuit layer also being disposed on the thermal conductive belts via a thermal conductive adhesion; and
   a plurality of LED chips, being disposed on the copper circuit layer, and entering the housing interior by way of a light emitting surface thereof passing through the plurality of holes, respectively;
wherein the thermal conductive belts and the light source module are steadily disposed on the edge of the main frame through the thermal conductive material, therefore, when the LED chips emit light, the thermal conductive belts and the thermal conductive material conducting the heat produced by the LED chips to the edge of the main frame through a high efficiency thermal conducting way, so that the heat is dissipated through the main frame; moreover, by way of the thermal conductive belts and the thermal conductive material, the heat can be further evenly distributed over the baseplate.

13. The integrated backlight module with good heat equalization and heat dissipation performance of Clause 12, wherein the plurality of thermal conductive belts are disposed on the baseplate by one way selected from the group consisting of: locally laid and overall laid.

14. The integrated backlight module with good heat equalization and heat dissipation performance of Clause 12, wherein the material of the main frame is selected from the group consisting of: iron, aluminium and ceramics.

15. The integrated backlight module with good heat equalization and heat dissipation performance of Clause 12, wherein the housing formed by the reflective member is selected from the group consisting of: 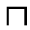 -shaped housing and L-shaped housing.

16. The integrated backlight module with good heat equalization and heat dissipation performance of Clause 12, wherein the thermal conductive material is selected from the group consisting of: thermal conductive adhesion and solder.

17. The integrated backlight module with good heat equalization and heat dissipation performance of Clause 12, wherein the manufacture material of the thermal conductive belt is selected from the group consisting of: copper, aluminium and graphite.

18. The integrated backlight module with good heat equalization and heat dissipation performance of Clause 12, wherein the light source module is selected from the group consisting of: direct-type light source module and edge-type light source module.

19. The integrated backlight module with good heat equalization and heat dissipation performance of Clause 12, further comprising a thermal radiative material coated on the outside surface of the main frame.

20. The integrated backlight module with good heat equalization and heat dissipation performance of Clause 19, wherein the thermal radiative material is selected from the group consisting of: white paint and nano diamond.

21. An integrated backlight module with good heat equalization and heat dissipation performance, comprising:
a main frame, comprising at least one edge and one baseplate, and having good heat dissipation property;
a welded material, being welded to the edge and the baseplate;
a thermal conductive medium, being attached to the welded material via a second surface thereof;
a plurality of thermal conductive belts, being attached to a first surface of the thermal conductive medium; and
at least one light source module, being disposed on the edge of the main frame and adopted for providing a backlight source to a light guiding plate in the main frame, the light source module comprising:
   a reflective member, being formed as a housing, wherein the housing having a plurality of holes disposed in a housing bottom thereof;
   a copper circuit layer, being attached to the outside of the housing bottom, and the copper circuit layer also being disposed on the thermal conductive belts via a thermal conductive adhesion; and
   a plurality of LED chips, being disposed on the copper circuit layer, and entering the housing interior by way of a light emitting surface thereof passing through the plurality of holes, respectively;
wherein when the LED chips emit light, the thermal conductive belts and the thermal conductive medium conducting the heat produced by the LED chips to the edge of the main frame through a high efficiency thermal conducting way; moreover, by way of the thermal conductive belts and the thermal conductive medium disposed on the baseplate, the heat can be further evenly distributed over the baseplate.

22. The integrated backlight module with good heat equalization and heat dissipation performance of Clause 21, wherein the welded material is disposed on the baseplate by one way selected from the group consisting of: locally laid and overall laid.

23. The integrated backlight module with good heat equalization and heat dissipation performance of Clause 21, wherein the plurality of thermal conductive belts are disposed to the first surface of the thermal conductive medium by one way selected from the group consisting of: locally laid and overall laid.

24. The integrated backlight module with good heat equalization and heat dissipation performance of Clause 21, wherein the material of the main frame is selected from the group consisting of: iron, aluminium and ceramics.

25. The integrated backlight module with good heat equalization and heat dissipation performance of Clause 21, wherein the thermal conductive medium is selected from the group consisting of: copper, aluminium with a nickel-plating formed on one surface thereof, aluminium with a copper-plating formed on one surface thereof, and nickel aluminium alloy.

26. The integrated backlight module with good heat equalization and heat dissipation performance of Clause 21, wherein the housing formed by the reflective member is selected from the group consisting of: 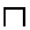 -shaped housing and L-shaped housing.

27. The integrated backlight module with good heat equalization and heat dissipation performance of Clause 21, wherein the manufacture material of the thermal conductive belt is selected from the group consisting of: copper, aluminium and graphite.

28. The integrated backlight module with good heat equalization and heat dissipation performance of Clause 21, wherein the light source module is selected from the group consisting of: direct-type light source module and edge-type light source module.

29. The integrated backlight module with good heat equalization and heat dissipation performance of Clause 21, further comprising a thermal radiative material coated on the outside surface of the main frame.

30. The integrated backlight module with good heat equalization and heat dissipation performance of Clause 29, wherein the thermal radiative material is selected from the group consisting of: white paint and nano diamond.

31. An integrated backlight module with good heat equalization and heat dissipation performance, comprising:
a main frame, having at least one edge and good heat dissipation property;
a welded material, being welded to the edge of the main frame;
a thermal conductive medium, being attached to the welded material by a second surface thereof; and
at least one light source module, being attached to a first surface of the thermal conductive medium via a thermal conductive adhesion, so as to provide a backlight source to a light guiding plate in the main frame, the light source module comprising:
   a housing, having a plurality of holes disposed in a housing bottom thereof;
   a reflective layer, being formed in the housing;
   a copper circuit layer, being attached to the outside of the housing bottom, and the copper circuit layer also being attached to the first surface of the thermal conductive medium through the thermal conductive adhesion; and
   a plurality of LED chips, being disposed on the copper circuit layer, and entering the housing interior by way of a light emitting surface thereof passing through the plurality of holes, respectively;
wherein when the LED chips emit light, the thermal conductive medium conducting the heat produced by the LED chips to the edge of the main frame through a high efficiency thermal conducting way, so that the heat is dissipated through the main frame.

32. The integrated backlight module with good heat equalization and heat dissipation performance of Clause 31, further comprising a plurality of thermal conductive belts, being disposed on the edge of the main frame and also simultaneously laid on a baseplate of the main frame, the thermal conductive belts being used for evenly distributing the heat conducted to edge over the baseplate.

33. The integrated backlight module with good heat equalization and heat dissipation performance of Clause 32, wherein the plurality of thermal conductive belts are laid on the baseplate by one way selected from the group consisting of: locally laid and overall laid.

34. The integrated backlight module with good heat equalization and heat dissipation performance of Clause 31, wherein the material of the main frame is selected from the group consisting of: iron, aluminium and ceramics.

35. The integrated backlight module with good heat equalization and heat dissipation performance of Clause 31, wherein the thermal conductive medium is selected from the group consisting of: copper, aluminium with a nickel-plating formed on one surface thereof, aluminium with a copper-plating formed on one surface thereof, and nickel aluminium alloy.

36. The integrated backlight module with good heat equalization and heat dissipation performance of Clause 31, wherein the manufacture material of the thermal conductive belt is selected from the group consisting of: copper, aluminium and graphite.

37. The integrated backlight module with good heat equalization and heat dissipation performance of Clause 31, wherein the light source module is selected from the group consisting of: direct-type light source module and edge-type light source module.

38. The integrated backlight module with good heat equalization and heat dissipation performance of Clause 31, wherein the reflective layer is formed in the housing by one way selected from the group consisting of: coating, painting and spray.

39. The integrated backlight module with good heat equalization and heat dissipation performance of Clause 31, wherein the thermal conductive adhesion is attached to the first surface of the thermal conductive medium by one way selected from the group consisting of: locally attached and overall attached.

40. The integrated backlight module with good heat equalization and heat dissipation performance of Clause 31, further comprising a thermal radiative material coated on the outside surface of the main frame.

41. An integrated backlight module with good heat equalization and heat dissipation performance, comprising:
a main frame, comprising at least one edge and one baseplate, wherein the baseplate having a plurality of first holes;
at least one light source module, being disposed on the baseplate by way of being attached to the edge of the main frame, and being used for providing a backlight source to a light guiding plate in the main frame, the light source module comprising:
   a housing, having a plurality of second holes disposed in a housing bottom thereof;
   a reflective layer, being formed in the housing;
   a copper circuit layer, being attached to the outside of the housing bottom via an insulating adhesion and having a plurality of third holes opposite to the first holes and the second holes; and
   a plurality of LED chips, having a heat sink and a plurality of welding points, the LED chips being disposed on the copper circuit layer by way of the welding points; and
   a plurality of thermal conductive media, passing through the first holes, the second holes and the third holes, and entering the housing interior from the outside of the baseplate, so as to contact the heat sinks of the LED chips through a heat dissipating medium, respectively;
wherein when the LED chips emit light, the thermal conductive media conducting the heat produced by the LED chips to the edge of the main frame through a high efficiency thermal conducting way, so that the heat is dissipated through the main frame; furthermore, by way of the thermal convection between the thermal conductive media and the external air, the heat can be simultaneously dissipated.

42. The integrated backlight module with good heat equalization and heat dissipation performance of Clause 41, wherein the housing is selected from the group consisting of: 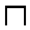 -shaped housing and L-shaped housing.

43. The integrated backlight module with good heat equalization and heat dissipation performance of Clause 42, wherein the manufacture material of the housing is selected from the group consisting of: copper, aluminium, electrolytic zinc steel plate, and hot-dip galvanization steel plate.

44. The integrated backlight module with good heat equalization and heat dissipation performance of Clause 41, wherein the thermal conductive medium is selected from the group consisting of: copper, aluminium with a nickel-plating formed on one surface thereof, aluminium with a copper-plating formed on one surface thereof, and nickel aluminium alloy.

45. The integrated backlight module with good heat equalization and heat dissipation performance of Clause 41, wherein the heat dissipating medium is selected from the group consisting of: thermal paste and solder.

46. An integrated backlight module with good heat equalization and heat dissipation performance, comprising:
a main frame, having at least one edge and one baseplate;
at least one light source module, being disposed on the baseplate by way of being attached to the edge of the main frame, and being used for providing a backlight source to a light guiding plate in the main frame, the light source module comprising:
   a housing, having a housing bottom, wherein a plurality of thermal conductive media are formed in the housing bottom;
   a reflective layer, being formed in the housing;
   a copper circuit layer, being attached to the outside of the housing bottom via an insulating adhesion and having a plurality of third holes; and
   a plurality of LED chips, being disposed on the copper circuit layer;
wherein the thermal conductive media contact the LED chips via a heat dissipating medium, therefore, when the LED chips emit light, the thermal conductive media conducting the heat produced by the LED chips to the housing through a high efficiency thermal conducting way, so that the heat is transferred to the edge of the main frame through the housing and is further dissipated via the main frame.

47. The integrated backlight module with good heat equalization and heat dissipation performance of Clause 46, wherein the housing is selected from the group consisting of: 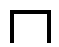 -shaped housing and L-shaped housing.

48. The integrated backlight module with good heat equalization and heat dissipation performance of Clause 47, wherein the manufacture material of the housing is selected from the group consisting of: copper, aluminium, electrolytic zinc steel plate, and hot-dip galvanization steel plate.

49. The integrated backlight module with good heat equalization and heat dissipation performance of Clause 46, wherein the heat dissipating medium is selected from the group consisting of: thermal paste and solder.

50. The integrated backlight module with good heat equalization and heat dissipation performance of Clause 46, wherein the thermal conductive medium is selected from the group consisting of: copper, aluminium with a nickel-plating formed on one surface thereof, aluminium with a copper-plating formed on one surface thereof, and nickel aluminium alloy.

51. The integrated backlight module with good heat equalization and heat dissipation performance of Clause 46, wherein the reflective layer is formed in the housing by one way selected from the group consisting of: coating, painting and spray.

52. An integrated backlight module with good heat equalization and heat dissipation performance, comprising:
a main frame, having at least one edge and one baseplate;
a thermal conductive belt, being formed as a housing and disposed on the edge of the main frame, wherein the thermal conductive belt having heat dissipation property; and
at least one light source module, being disposed in the housing formed by the thermal conductive belt, and being used for providing a backlight source to a light guiding plate in the main frame, the light source module comprising:
   a copper circuit layer, being disposed to a housing bottom of the housing through a thermal conductive adhesion; and
   a plurality of LED chips, being disposed on the copper circuit layer;
wherein when the LED chips emit light, the thermal conductive belt conducting the heat produced by the LED chips to the housing by a high efficiency thermal conducting way, so that the heat is transferred to the edge of the main frame via the housing and is further dissipated through the main frame.

53. The integrated backlight module with good heat equalization and heat dissipation performance of Clause 52, wherein the manufacture material of the thermal conductive belt is selected from the group consisting of: copper, aluminium and graphite.

54. The integrated backlight module with good heat equalization and heat dissipation performance of Clause 52, further comprising a reflective layer formed in the housing.

55. The integrated backlight module with good heat equalization and heat dissipation performance of Clause 52, wherein the thermal conductive adhesion is attached to the housing bottom by one way selected from the group consisting of: locally attached and fully attached.

56. The integrated backlight module with good heat equalization and heat dissipation performance of Clause 53, wherein the reflective layer is formed in the housing by one way selected from the group consisting of: coating, painting and spray.

The integrated backlight module with good heat equalization and heat dissipation performance of Clause 52, wherein the housing formed by the thermal conductive belt is selected from the group consisting of: 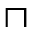 -shaped housing and L-shaped housing.

## Claims

1. An integrated backlight module with good heat equalization and heat dissipation performance, comprising:
a main frame, having at least one edge and good heat dissipation property;
a welded material, being welded to the edge:
a thermal conductive medium, being attached to the welded material by a second surface thereof; and
at least one light source module, being attached to a first surface of the thermal conductive medium via a thermal conductive adhesion, and being used for providing a backlight source to a light guiding plate in the main frame, the light source module comprising:
a reflective member, being formed as a housing, and the housing having a plurality of holes disposed in a housing bottom thereof;
a copper circuit layer, being attached to the outside of the housing bottom, and the copper circuit layer also being attached to the thermal conductive adhesion; and
a plurality of LED chips, being disposed on the copper circuit layer, and entering the housing interior by way of a light emitting surface thereof passing through the plurality of holes, respectively;
wherein when the LED chips emit light, the thermal conductive medium conducting the heat produced by the LED chips to the edge of the main frame through a high efficiency thermal conducting way, so that the heat is dissipated via the main frame.

2. The integrated backlight module with good heat equalization and heat dissipation performance of Claim 1, further comprising a plurality of thermal conductive belts, being disposed on the edge of the main frame and also simultaneously laid on a baseplate of the main frame, the thermal conductive belts being used for evenly distributing the heat conducted to edge over the baseplate.

3. The integrated backlight module with good heat equalization and heat dissipation performance of Claim 2, wherein the plurality of thermal conductive belts are laid on the baseplate by one way selected from the group consisting of locally laid and overall laid.

4. The integrated backlight module with good heat equalization and heat dissipation performance of Claim 1, wherein the material of the main frame is selected from the group consisting of: iron, aluminum and ceramics.

5. The integrated backlight module with good heat equalization and heat dissipation performance of Claim 1, wherein the thermal conductive medium is selected from the group consisting of: copper, aluminum with a nickel-plating formed on one surface thereof, aluminum with a copper-plating formed on one surface thereof, and nickel aluminum alloy.

6. The integrated backlight module with good heat equalization and heat dissipation performance of Claim 1, wherein the housing formed by the reflective member is selected from the group consisting of: 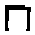 -shaped housing and L-shaped housing.

7. The integrated backlight module with good heat equalization and heat dissipation performance of Claim 1, wherein the welded material is selected from the group consisting of: low temperature solder and high temperature solder.

8. The integrated backlight module with good heat equalization and heat dissipation performance of Claim 2, wherein the manufacture material of the thermal conductive belt is selected from the group consisting of: copper, aluminum and graphite.

9. The integrated backlight module with good heat equalization and heat dissipation performance of Claim 1, wherein the light source module is selected from the group consisting of: direct-type light source module and edge-type light source module.

10. The integrated backlight module with good heat equalization and heat dissipation performance of Claim 1, further comprising a thermal radiative material coated on the outside surface of the main frame.

11. The integrated backlight module with good heat equalization and heat dissipation performance of Claim 10, wherein the thermal radiative material is selected from the group consisting of: white paint and nano diamond.

12. An integrated backlight module with good heat equalization and heat dissipation performance, comprising:
a main frame, having at least one edge and good heat dissipation property;
a thermal conductive material, being simultaneously disposed on the edge and a baseplate of the main frame;
a plurality of thermal conductive belts, being disposed on the edge and the baseplate of the main frame through the thermal conductive material; and
at least one light source module, being disposed on the edge of the main frame and adopted for providing a backlight source to a light guiding plate in the main frame, the light source module comprising:
a reflective member, being formed as a housing, and the housing having a plurality of holes disposed in a housing bottom thereof;
a copper circuit layer, being attached to the outside of the housing bottom, moreover, the copper circuit layer also being disposed on the thermal conductive belts via a thermal conductive adhesion; and
a plurality of LED chips, being disposed on the copper circuit layer, and entering the housing interior by way of a light emitting surface thereof passing through the plurality of holes, respectively;
wherein the thermal conductive belts and the light source module are steadily disposed on the edge of the main frame through the thermal conductive material, therefore, when the LED chips emit light, the thermal conductive belts and the thermal conductive material conducting the heat produced by the LED chips to the edge of the main frame through a high efficiency thermal conducting way, so that the heat is dissipated through the main frame; moreover, by way of the thermal conductive belts and the thermal conductive material, the heat can be further evenly distributed over the baseplate.

13. The integrated backlight module with good heat equalization and heat dissipation performance of Claim 12, wherein the plurality of thermal conductive belts are disposed on the baseplate by one way selected from the group consisting of: locally laid and overall laid.

14. The integrated backlight module with good heat equalization and heat dissipation performance of Claim 12, wherein the material of the main frame is selected from the group consisting of: iron, aluminum and ceramics.

15. The integrated backlight module with good heat equalization and heat dissipation performance of Claim 12, wherein the housing formed by the reflective member is selected from the group consisting of: 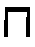 -shaped housing and L-shaped housing.

16. The integrated backlight module with good heat equalization and heat dissipation performance of Claim 12, wherein the thermal conductive material is selected from the group consisting of: thermal conductive adhesion and solder.

17. The integrated backlight module with good heat equalization and heat dissipation performance of Claim 12, wherein the manufacture material of the thermal conductive belt is selected from the group consisting of: copper, aluminum and graphite.

18. The integrated backlight module with good heat equalization and heat dissipation performance of Claim 12, wherein the light source module is selected from the group consisting of direct-type light source module and edge-type light source module.

19. The integrated backlight module with good heat equalization and heat dissipation performance of Claim 12, further comprising a thermal radiative material coated on the outside surface of the main frame.

20. The integrated backlight module with good heat equalization and heat dissipation performance of Claim 19, wherein the thermal radiative material is selected from the group consisting of: white paint and nano diamond.
